# EUROPÄISCHE PATENTANMELDUNG

(11) **EP 4 230 588 A1**
(43) Veröffentlichungstag der Anmeldung: **23.08.2023**
(21) Anmeldenummer: 23155210.0
(22) Anmeldetag: 06.02.2023
(51) Int. Cl.: C02F 1/28, C02F 1/78, C02F 101/30, C02F 101/32, C02F 1/20, C02F 1/26, C02F 1/00

(54) **VERFAHREN UND VORRICHTUNG ZUR KONTINUIERLICHEN, ZUMINDEST TEILWEISEN ENTFERNUNG VON FREMDSTOFFEN AUS EINEM FLUID, INSBESONDERE IN ABWASSER**

(30) Priorität: 16.02.2022 DE 102022201629
(71) Anmelder: Unisensor Sensorsysteme GmbH, 76149 Karlsruhe (DE)
(72) Erfinder: Krieg, Gunther, 76227 Karlsruhe (DE)
(74) Vertreter: Ullrich & Naumann PartG mbB

(57) **Zusammenfassung**

Die Erfindung betrifft ein Verfahren zur kontinuierlichen, zumindest teilweisen Entfernung von Fremdstoffen aus einem Fluid mittels einer Reinigungsvorrichtung, wobei die Reinigungsvorrichtung einen Zulauf für ein zu reinigendes Fluid umfasst und einen Ablauf für das durch die Reinigungsvorrichtung gereinigte Fluid, umfassend die Schritte
- Festlegen zumindest eines Leitfremdstoffs für eine Gruppe von Fremdstoffen gleichen Zwecks, wobei die Gruppe zumindest den Leitfremdstoff und zumindest einen weiteren Fremdstoff umfasst,
- Ermitteln eines Neutralisierungsmediums aus einer Anzahl bereitgestellter Neutralisierungsmedien für die Gruppe von Fremdstoffen
- Entnehmen einer ersten Probe aus dem Fluid in einem Zulauf vor der Reinigungsvorrichtung und Entnehmen einer zweiten Probe in einem Ablauf der Reinigungsvorrichtung,
- Analysieren der entnommenen Proben zumindest mittels UV/VIS-Spektroskopie,
- Ermitteln der Konzentration des Leitfremdstoffs in den analysierten Proben anhand jeweils zumindest eines der aufgenommenen Spektren,
- Vergleichen der ermittelten Konzentrationen des Leitfremdstoffs in Zu- und Ablauf und Bereitstellen eines Vergleichsergebnisses,
- Zugeben einer Menge des Neutralisierungsmediums entsprechend dem bereitgestellten Vergleichsergebnis in das Fluid im Zulauf zur zumindest teilweisen Neutralisierung der Gruppe von Fremdstoffen mit dem Leitfremdstoff.

## Beschreibung

Die Erfindung betrifft ein Verfahren zur kontinuierlichen, zumindest teilweisen Entfernung von Fremdstoffen, insbesondere von Korrosionsschutzmitteln und/oder Medikamenten, aus einem Fluid, insbesondere in Abwasser, mittels einer Reinigungsvorrichtung, wobei die Reinigungsvorrichtung einen Zulauf für ein zu reinigendes Fluid umfasst und einen Ablauf für das durch die Reinigungsvorrichtung gereinigte Fluid.

Die Erfindung betrifft weiter eine Reinigungsvorrichtung, insbesondere eine großtechnische Kläranlage, zur kontinuierlichen, zumindest teilweisen Entfernung von Fremdstoffen, insbesondere von Korrosionsschutzmitteln und/oder Medikamenten, aus einem Fluid, insbesondere in Abwasser.

Obwohl auf beliebige Fluids anwendbar, wird die vorliegende Erfindung in Bezug auf Abwasser als Fluid beschrieben.

Trinkwasser ist eines der wichtigsten Lebensmittel. Um dieses in ausreichendem Maß bereitzustellen, ist es notwendig, Abwässer, die durch Schadstoffe oder Spurenstoffe verunreinigt sind, zu reinigen. So führt beispielsweise der Eintrag von Hormonen aus geklärtem Abwasser in Oberflächengewässer zu einer Verweiblichung der Fischbestände, was deren Populationen schrumpfen lässt.

Zur groben Bestimmung von Schadstoffen, insbesondere der Belastung von Wasser mit natürlichen oder anthropogenen organischen Verbindungen, wird üblicherweise die Lichtschwächung in Abwasser bei einer Schichtdicke von 1-3 cm, den sogenannten SAK254-Wert, also die Lichtschwächung durch die Probe bei einer Wellenlänge von 254 nm, bestimmt. Die entsprechende Lichtschwächung beziehungsweise optische Absorption bei 254 nm ermöglicht eine kumulierte Bestimmung von organischen Belastungen wie Lignine oder Humine. Nachteilig dabei ist wiederum, dass lediglich summarisch ein grobes Maß für eine bestimmte Klasse von organischen Verbindungen im Abwasser bereitgestellt wird. Gehalte der einzelnen anthropogenen Stoffe sind nicht ermittelbar.

Um die genannten Spurenstoffe aus dem Abwasser herauszufiltern, sind beispielsweise aus der EP 2 786 126 B1 oder der EP 3 486 637 A1 Vorrichtungen und Verfahren zur Bestimmung von Schadstoffen in Trinkwasser bekannt geworden. Hierbei wird dem, insbesondere bereits teilweise gereinigten, Abwasser, konstante Mengen an Aktivkohle, insbesondere in Form von Pulveraktivkohle, zu dosiert, sodass die Schad- beziehungsweise Spurenstoffe daran adsorbiert werden und sich als Klärschlamm absetzen. Dieser wird anschließend bei hohen Temperaturen in Müllverbrennungsanlagen verbrannt. Über das Jahr als auch innerhalb eines Tages hinweg schwanken jedoch die Konzentrationen von Spurenstoffen erheblich, was dann zu einem ineffizienten Einsatz der Aktivkohle und damit zu hohen Kosten führt. Darüber hinaus ist der hohe Aufwand problematisch, da nur selektiv einzelne Spurenstoffe, wie beispielsweise Nitrat NO₃⁻ erkannt und aus dem Trinkwasser entfernt werden können.

Eine Aufgabe der vorliegenden Erfindung ist es daher, ein Verfahren und eine Vorrichtung anzugeben, welche eine kostengünstige und gleichzeitig kontinuierliche Entfernung von Fremdstoffen aus einem Fluid ermöglichen.

Eine weitere Aufgabe der vorliegenden Erfindung ist es, ein Verfahren und eine Vorrichtung anzugeben, welche den personellen und instrumentellen Aufwand der Abwasserreinigung und -überwachung senken und gleichzeitig eine zuverlässige Reinigung für mehrere Stoffe bereitstellen.

Eine weitere Aufgabe der vorliegenden Erfindung ist es, ein effizientes und kostengünstiges Verfahren und eine entsprechende Vorrichtung zur Entfernung von Fremdstoffen aus einem Fluid, wie beispielsweise Abwasser, bereitzustellen.

Eine weitere Aufgabe der vorliegenden Erfindung ist schließlich, eine alternative Vorrichtung und ein alternatives Verfahren anzugeben.

In einer Ausführungsform löst die vorliegende Erfindung die vorstehend genannten Aufgaben mit einem Verfahren zur kontinuierlichen, zumindest teilweisen Entfernung von Fremdstoffen, insbesondere von Korrosionsschutzmitteln und/oder Medikamenten, aus einem Fluid, insbesondere in Abwasser, mittels einer Reinigungsvorrichtung, wobei die Reinigungsvorrichtung einen Zulauf für ein zu reinigendes Fluid umfasst und einen Ablauf für das durch die Reinigungsvorrichtung gereinigte Fluid, umfassend die Schritte
- Festlegen zumindest eines Leitfremdstoffs für eine Gruppe von Fremdstoffen gleichen Zwecks, wobei die Gruppe zumindest den Leitfremdstoff und zumindest einen weiteren Fremdstoff, insbesondere mehrere weitere Fremdstoffe, umfasst,
- Ermitteln eines Neutralisierungsmediums aus einer Anzahl bereitgestellter Neutralisierungsmedien für die Gruppe von Fremdstoffen,
- Entnehmen einer ersten Probe aus dem Fluid in einem Zulauf vor der Reinigungsvorrichtung und Entnehmen einer zweiten Probe in einem Ablauf der Reinigungsvorrichtung,
- Analysieren der entnommenen Proben zumindest mittels UV/VIS-Spektroskopie, wobei das Analysieren mittels UV/VIS-Spektroskopie die folgenden Schritte umfasst:
   - Anregen der jeweiligen Probe mit Licht, insbesondere mit Licht eines Lasers, einer Xenonlampe oder einer Deuteriumlampe, mit zumindest einer Anregungswellenlänge, und
   - Aufnehmen zumindest eines Absorptionsspektrums des durch die Probe transmittierten Lichts und/oder zumindest eines Fluoreszenzspektrums von reemittiertem Licht der jeweiligen Probe mittels einer Detektionseinrichtung,
- Ermitteln der Konzentration des Leitfremdstoffs in den analysierten Proben anhand jeweils zumindest eines der aufgenommenen Spektren,
- Vergleichen der ermittelten Konzentrationen des Leitfremdstoffs in Zu- und Ablauf und Bereitstellen eines Vergleichsergebnisses, und
- Zugeben einer Menge des Neutralisierungsmediums entsprechend dem bereitgestellten Vergleichsergebnis in das Fluid im Zulauf zur zumindest teilweisen Neutralisierung der Gruppe von Fremdstoffen mit dem Leitfremdstoff.

In einer Ausführungsform löst die vorliegende Erfindung die vorstehend genannten Aufgaben ebenfalls mit einer Reinigungsvorrichtung, insbesondere einer großtechnischen Kläranlage, zur kontinuierlichen, zumindest teilweisen Entfernung von Fremdstoffen, insbesondere von Korrosionsschutzmitteln und/oder Medikamenten, aus einem Fluid, insbesondere in Abwasser,
umfassend
einen Zulauf für ein zu reinigendes Fluid zu einer Reinigungseinrichtung,
einen Ablauf der Reinigungseinrichtung für ein gereinigtes Fluid,
eine Entnahmevorrichtung,
eine Festlegeeinrichtung,
eine Neutralisierungsmediumbereitstellungseinrichtung,
eine Detektionseinrichtung,
eine Zuführeinrichtung,
eine Auswerteeinrichtung und
eine Steuereinrichtung, die mit der Auswerteeinrichtung verbunden ist, wobei
die Entnahmevorrichtung ausgebildet ist, zum Entnehmen einer ersten Probe aus dem Fluid in dem Zulauf und zum Entnehmen einer zweiten Probe in dem Ablauf, und wobei
die Neutralisierungsmediumbereitstellungseinrichtung ausgebildet ist, zum Bereitstellen zumindest eines Neutralisierungsmediums für zumindest eine Gruppe von Fremdstoffen, und wobei
die Festlegeeinrichtung ausgebildet ist
   - zum Festlegen zumindest eines Leitfremdstoffs für eine Gruppe von Fremdstoffen gleichen Zwecks, wobei die Gruppe zumindest den Leitfremdstoff und zumindest einen weiteren Fremdstoff, insbesondere mehrere weitere Fremdstoffe, umfasst und
   - zum Ermitteln eines Neutralisierungsmediums aus einer Anzahl bereitgestellter Neutralisierungsmedien für die Gruppe von Fremdstoffen gleichen Zwecks, und wobei
die Auswerteeinrichtung ausgebildet ist zum
   - Analysieren der entnommenen Proben mittels UV/VIS-Spektroskopie, wobei das Analysieren mittels UV/VIS-Spektroskopie die folgenden Schritte umfasst:
      - Anregen der jeweiligen Probe mit Licht, insbesondere mit Licht eines Lasers, einer Xenonlampe oder einer Deuteriumlampe, mit zumindest einer Anregungswellenlänge, und
      - Aufnehmen zumindest eines Absorptionsspektrums des durch die Probe transmittierten Lichts und/oder zumindest eines Fluoreszenzspektrums von reemittiertem Licht der jeweiligen Probe mittels der Detektionseinrichtung, zum
   - Ermitteln von zumindest der Konzentration des Leitfremdstoffs in den analysierten Proben anhand jeweils zumindest eines der aufgenommenen Spektren, und zum
   - Vergleichen der ermittelten Konzentrationen des Leitfremdstoffs in Zu- und Ablauf und Bereitstellen eines Vergleichsergebnisses, und wobei
die Zuführeinrichtung ausgebildet ist, zum Zugeben einer Menge des Neutralisierungsmediums entsprechend dem bereitgestellten Vergleichsergebnis in das Fluid im Zulauf mittels der Neutralisierungsbereitstellungseinrichtung zur zumindest teilweisen Neutralisierung der Stoffe der Gruppe von Fremdstoffen mit dem Leitfremdstoff.

Überraschenderweise konnte festgestellt werden, dass die Detektion eines Leitfremdstoffs in einem Fluid ausreichend ist, um die zuzugebende Menge eines Neutralisierungsmediums für eine ganze Gruppe von Stoffen, die chemische und/oder physikalische Eigenschaften mit dem Leitfremdstoff gemein hat, zu bestimmen, um eine Reinigung des Fluids, mithin also die zumindest teilweise, insbesondere überwiegende, Entfernung der Stoffe der Gruppe aus dem Fluid bereitzustellen. Wird ein auf die Art und vorhandene Menge des Leitfremdstoffs abgestimmtes Neutralisierungsmedium zugesetzt, können die Konzentrationen der Fremdstoffe der Gruppe des Leitfremdstoffs um mehr als 50%, vorzugsweise mehr als 60%, insbesondere um 2/3, vorzugsweise um mehr als 70%, insbesondere mehr als 80%, im Ablauf gegenüber dem Zulauf gesenkt werden.

Unter dem Begriff "Fremdstoff" im Sinne der vorliegenden Erfindung sind insbesondere in der Beschreibung, vorzugsweise in den Ansprüchen, endokrine Wirkstoffe, Pflanzenschutzmittel, Körperpflegestoffe, Industriechemikalien und/oder Pharmazeutika, Spurenstoffe wie Biozide, Korrosionsschutzmittel, Röntgenkontrastmittel, Pharmaka und dergleichen zu verstehen.

Unter dem Begriff "Pflanzenschutzmittel" sind insbesondere in der Beschreibung, vorzugsweise in den Ansprüchen, Herbizide, Fungizide und/oder Insektizide zu verstehen.

Unter dem Begriff "endokriner Wirkstoff" sind insbesondere in der Beschreibung, vorzugsweise in den Ansprüchen, Hormone zu verstehen.

Unter dem Begriff "Fluid" ist insbesondere in der Beschreibung, vorzugsweise in den Ansprüchen, eine Flüssigkeit zu verstehen, insbesondere Oberflächenwasser, Flusswasser, Trinkwasser oder Abwasser. Schadstoffe im Sinne der Erfindung sind insbesondere in der Beschreibung, vorzugsweise in den Ansprüchen, Stoffe oder Stoffgemische, die schädlich für Menschen, Tiere und/oder Pflanzen sind. Hierunter fallen insbesondere natürliche und/oder anthropogene Schadstoffe.

Unter dem Begriff "Detektionseinrichtung" ist sowohl ein einzelner Detektor als auch eine Vielzahl von einzelnen Detektoren, insbesondere ein Detektorarray oder dergleichen, zu verstehen.

Unter dem Begriff "Neutralisierungsmedium" kann insbesondere in der Beschreibung, vorzugsweise in den Ansprüchen, ein Medium, Fluid oder dergleichen zu verstehen sein, welches eine Adsorption und/oder eine chemische Reaktion bereitstellt, mit welchem die Stoffe der Gruppe von Fremdstoffen mit dem Leitfremdstoff in für Menschen und/oder Tiere unschädlichere Stoffe, Medien oder Fluiden mittels einer chemischen Reaktion umgewandelt werden und/oder adsorbiert und/oder ausgefällt werden.

Einer der damit erzielten Vorteile ist, dass insbesondere mittels der spektroskopischen Analyse eine zuverlässige Ermittlung von vorgebbaren Leitfremdstoffen, insbesondere in Abwasser, ermöglicht wird. Gleichzeitig kann durch die Probenahme an Zulauf und Ablauf eine zuverlässige Überprüfung der zugegebenen Menge an Neutralisierungsmedium erfolgen, was die Zuverlässigkeit der Reinigung des Abwassers bei gleichzeitig effizienterem Einsatz von Neutralisierungsmedium verbessert. Ebenso ermöglichen Ausführungsformen der Erfindung eine im Wesentlichen kontinuierliche Überwachung von Gruppen von Fremdstoffen mittels des jeweiligen Leitfremdstoffs, da sowohl der zeitliche Aufwand als auch der Material- und Personalaufwand deutlich gesenkt werden. Aufwendige, zeitintensive Laboranalysen sind nicht mehr notwendig. Darüber hinaus sind eine genaue Dosierung und Zugabe von Neutralisierungsmitteln möglich, was einerseits einen wohldosierten Einsatz ermöglicht, andererseits erhebliche Kosten spart.

Weitere vorteilhafte Ausführungsformen, Merkmale und Vorteile der Erfindung sind in den Unteransprüchen beschrieben oder werden dadurch offenbar.

Gemäß einer vorteilhaften Weiterbildung der Erfindung wird das Vergleichsergebnis durch Vergleich der Differenz der beiden Konzentrationen mit einem Schwellwert ermittelt. Damit kann auf einfache und schnelle Weise ein Vergleichsergebnis bereitgestellt werden.

Gemäß einer weiteren vorteilhaften Weiterbildung der Erfindung werden als Neutralisierungsmedien ein Adsorptionsmittel, vorzugsweise Aktivkohle und/oder ein Oxidationsmittel, insbesondere Ozon, bereitgestellt. Damit kann auf flexible Weise ein Neutralisierungsmedium für unterschiedliche Fremdstoffgruppen bereitgestellt werden.

Gemäß einer weiteren vorteilhaften Weiterbildung der Erfindung wird die Aktivkohle in Pulverform und/oder als Granulat bereitgestellt. Damit ist einerseits eine einfache Bereitstellung, Bevorratung und Dosierung möglich, anderseits ist insbesondere bei der Bereitstellung als Granulat, die Aktivkohle besonders einfach aus dem Fluid wieder entfernbar, beispielsweise mittels Filtern.

Gemäß einer weiteren vorteilhaften Weiterbildung der Erfindung werden vor dem Analysieren die Fremdstoffe in der entnommenen Probe angereichert und/oder die Probe wird zumindest teilweise entgast. Damit wird eine zuverlässigere Analyse von Fremdstoffen in den entnommenen Proben ermöglicht.

Gemäß einer weiteren vorteilhaften Weiterbildung der Erfindung wird das Anreichern der Fremdstoffe mittels zumindest einem der folgenden Verfahren durchgeführt:
- lösungsmittelbasierter Festphasenextraktion,
- Festphasenextraktion mit subkritischem Wasser,
- temperaturgestufter Festphasenextraktion,
- lösungsmittelfreier Festphasenextraktion und/oder
- Destillation der Probe, insbesondere mittels fraktionierter Destillation, Vakuum-Destillation und/oder Überdruck-Destillation, vorzugsweise wobei die fraktionierte Destillation pH-angepasst durchgeführt wird.

Einer der mit der lösungsmittelbasierten Festphasenextraktion erzielten Vorteile ist eine Anreicherung der gesuchten Fremdstoffe und eine Abreicherung störender Stoffe aus der zu analysierenden Probe. Die Durchführung der genannten Festphasenextraktion wird insbesondere mittels entsprechender Kartuschen durchgeführt.

Materialien allgemein für die Festphasenextraktion umfassen modifiziertes Siliziumdioxid und/oder Zirkondioxid, Kohlenstoffmodifikationen, etc. Vorteil der Festphasenextraktion mit subkritischem Wasser ist, dass kein Verbrauchsmaterial bei reinem Wasser, insbesondere kein Lösungsmittel, benötigt wird. Ein weiterer Vorteil ist die erhöhte Flexibilität: Mit Wasser kann im Gegensatz zu Lösungsmitteln bis in den Bereich unterhalb von 200 nm gemessen werden. Lösungsmittel zeigen gegebenenfalls schneller eine Absorption im UV-C-Bereich. Durch eine temperaturgestufte Festphasenextraktion kann die Spezifizität erhöht werden, falls beispielsweise im Spektrum die Adsorptionskurven nicht eindeutig unterschieden werden können. Die Vakuum-destillation bietet wiederum den Vorteil, dass insbesondere bei einem flüssigen Medium in Form von Trinkwasser, die Kalkbildung, insbesondere in einem Verdampfer, reduziert werden kann, wohingegen bei der Überdruck-Destillation eine erhöhte Anreicherung von Fremdstoffen, insbesondere bei Pestiziden, im Vergleich zur Destillation bei Umgebungsdruck oder bei der Vakuum-Destillation ermöglicht wird.

Gemäß einer weiteren vorteilhaften Weiterbildung der Erfindung werden Analysierstörstoffe in dem Fluid identifiziert, insbesondere Nitrat oder dergleichen, und diese werden vor dem Analysieren der Probe auf Fremdstoffe zumindest teilweise entfernt. Vorteil hiervon ist eine deutlich genauere Analyse der Probe auf Fremdstoffe.

Gemäß einer weiteren vorteilhaften Weiterbildung der Erfindung umfasst das Analysieren des zumindest einen Absorptionsspektrums eine Durchführung eines multivariaten Kalibrierungsverfahrens, vorzugsweise eines partial-least-square-Verfahrens, PLS-Verfahrens. Multivariate Kalibrierung hat gegenüber einer univariaten Kalibrierung unter anderem den Vorteil, dass auch Mischungen von mehreren Spurenstoffen in dem flüssigen Medium zuverlässig ermittelt werden können. Der Vergleich der aufgenommenen Spektren mit Referenzspektren hat unter anderem den Vorteil, dass die Referenzspektren lediglich einmalig aufgenommen und hinterlegt werden müssen, um diese dann mit dem aufgenommenen Spektrum vergleichen zu können. Der Vergleich zwischen den aufgenommenen Spektren und den Referenzspektren kann dabei beispielsweise anhand der Positionen der Maxima und Minima auf der Wellenlängenskala, den Halbwertsbreiten, das heißt den Wellenlängenintervallen auf halber Höhe, den Fußbreiten, das heißt den Wellenlängenintervallen, innerhalb derer ein Spektrum vorliegt, den Amplitudenverhältnissen der vorliegenden Maxima, den Amplitudenverhältnissen der vorliegenden Minima, und/oder den Amplitudenverhältnissen von Maxima und Minima erfolgen. Die einzelnen verglichenen Werte können gewichtet werden und so die jeweiligen Fremdstoffe dann zuverlässig ermittelt werden. Ein hierzu notwendiger Rechenaufwand zur Berechnung der jeweiligen Werte, etc., der in der entsprechenden Vorrichtung durchgeführt wird, ermöglicht eine zeitnahe und zuverlässige Ermittlung der Fremdstoffe in dem Fluid anhand des Vergleichs zwischen Referenzspektren und aufgenommenen Spektren. Zweckmäßigerweise wird dabei die multivariate Kalibrierung mittels der Teilweisen-Kleinste-Quadrate-Regression durchgeführt. Die als auch partial-least-squares (PLS-Regression) bekannte Regression ermöglicht ein besonders zuverlässiges Ermitteln von unterschiedlichen Fremdstoffen und damit der Leitfremdstoffe anhand des oder der aufgenommenen Spektren.

Gemäß einer weiteren vorteilhaften Weiterbildung der Erfindung umfasst das Analysieren der entnommenen Probe eine Durchführung eines Flüssigchromatographie-Verfahrens, insbesondere mittels HPLC, vorzugsweise umfassend die Gradientenmethode. Damit kann unter erheblicher Zeitersparnis gegenüber einer herkömmlichen Laboranalyse ein Analyseresultat der Probe bereitgestellt werden.

Gemäß einer weiteren vorteilhaften Weiterbildung der Erfindung erfolgt das Entnehmen der Probe aus Zu- und Ablauf periodisch und/oder auf Anforderung, insbesondere separat für Zu- und Ablauf. Damit wird eine regelmäßige Probenahme und Analyse der Probe in Bezug auf den Leitfremdstoff sichergestellt.

Gemäß einer weiteren vorteilhaften Weiterbildung der Erfindung erfolgt das Entnehmen der Probe aus dem Zulauf und das Entnehmen der Probe aus dem Ablauf zeitlich versetzt mit einer vorgebbaren Zeitspanne. Damit wird sichergestellt, dass sich die Neutralisierungsmediumzugabe auch bei der nächsten Probenahme im Ablauf bereits auf die Konzentration des Leitfremdstoffs ausgewirkt hat. Eine aufwendige zeitliche Koordinierung der Analyseergebnisse aus Zu- und Ablauf wird dadurch vermieden.

Gemäß einer weiteren vorteilhaften Weiterbildung der Erfindung wird die zumindest eine Gruppe von Fremdstoffen gebildet durch
- korrosionshemmende Stoffe,
- pharmazeutische Stoffe, insbesondere Arzneistoffe, vorzugsweise Nichtopioid-Analgetika,
- unkrautbekämpfende Stoffe, insbesondere Wuchsstoffherbizide,
- Biozide,
- Röntgenkontrastmittel,
- Hormone, oder
- polyzyklische aromatische Kohlenwasserstoffe.

Vorteil hiervon ist eine selektive Neutralisierung der Fremdstoffe der jeweiligen Gruppe, basierend auf einem Leitfremdstoff der jeweiligen Gruppe.

Gemäß einer weiteren vorteilhaften Weiterbildung der Erfindung wird als der Leitfremdstoff für die Gruppe der korrosionshemmenden Stoffe Benzotriazol gewählt und/oder wird als der Leitfremdstoff für die Gruppe der pharmazeutische Stoffe 2-{2-[(2,6-Dichlorphenyl)amino]phenyl}ethansäure gewählt. Vorteil hiervon ist einerseits, dass eine ausreichende Konzentration des Leitfremdstoffs, beispielsweise in Abwasser, vorhanden ist, zudem der Stoff ausreichend genau und schnell detektiert werden kann sowie darüber hinaus die zusetzende Menge an Neutralisierungsmedium für die jeweilige gesamte Gruppe repräsentativ ist.

Gemäß einer weiteren vorteilhaften Weiterbildung der Erfindung erfolgt das Analysieren der Probe aus dem Zulauf und aus dem Ablauf anhand getrennter Kreisläufe. Einer der damit erzielten Vorteile ist, dass unabhängig voneinander Proben in Zu- und Ablauf entnommen und analysiert werden können.

Gemäß einer weiteren vorteilhaften Weiterbildung der Erfindung wird die jeweils entnommene Probe wieder dem Zulauf oder Ablauf zugeführt. Damit ist eine kontinuierliche Probenahme möglich, eine Entsorgung der entnommenen Probe entfällt.

Gemäß einer weiteren vorteilhaften Weiterbildung der Erfindung wird zum Analysieren der entnommenen Probe eine Flüssigkeits-Hohlleiter-Kapillarzelle verwendet, insbesondere wobei die Flüssigkeits-Hohlleiter-Kapillarzelle auf ihrer Innenseite mit einer hydrophilen Schicht versehen ist. Als Flüssigkeits-Hohlleiter-Kapillarzellen werden insbesondere faseroptische Durchflusszellen bezeichnet, die eine erhöhte optische Weglänge, insbesondere zwischen 10 cm und 500 cm, bei gleichzeitig kleinen benötigten Probenvolumina zwischen ca. 2 Mikroliter und ca. 3 Milliliter aufweisen. Die Flüssigkeits-Hohlleiter-Kapillarzelle kann dabei ein Glasrohr, insbesondere ein Quarzglasrohr, aufweisen, welches auf der Außenseite mit einem Polymer beschichtet ist, wobei das Polymer einen niedrigeren Brechungsindex als Wasser aufweist. Vorteil hierbei ist, dass die Intensität des Lichts auf einem nachfolgenden Detektor erhöht wird. Es können damit größere Messstrecken realisiert werden, was die Messgenauigkeit erhöht. Auf der Innenseite kann das Quarzglasrohr mit einer hydrophilen Beschichtung, insbesondere mit Nanopartikeln, versehen sein, was den Durchfluss erhöht und der Bildung von Luftblasen entgegenwirkt, sodass die Zuverlässigkeit einer Messung der Probe erhöht wird. Die entsprechende optische Messzelle kann aus Quarz und/oder Edelstahl hergestellt sein. Einer der damit erzielten Vorteile ist, dass damit eine zuverlässige und gleichzeitig kostengünstige Analysevorrichtung mit optischer Messzelle zur Verfügung gestellt werden kann.

Gemäß einer weiteren vorteilhaften Weiterbildung der Erfindung wird das Absorptions- und/oder Fluoreszenzspektrum in einem Wellenlängenbereich zwischen 50 nm und 1.500 nm, vorzugsweise zwischen 100 nm und 1.200 nm, insbesondere zwischen 180 nm und 1.050 nm, besonders vorzugsweise zwischen 200 nm und 400 nm, aufgenommen. Der damit erzielte Vorteil ist, dass in dem Wellenlängenbereich insbesondere Moleküle mit Doppelbindungen und aromatische Moleküle absorbieren und somit anhand von Absorptionsspektren zuverlässig detektierbar beziehungsweise ermittelbar sind. Auf diese Weise können zuverlässig insbesondere Biozide, Röntgenkontrastmittel, Korrosionsschutzmittel und Hormone sowie polyzyklische aromatische Kohlenwasserstoffe, also beispielsweise Stoffe mit mehreren Benzolringen, als Fremdstoffe detektiert werden. Darüber hinaus können auch konjugierte Doppelbindungen sowie Carbonyle und andere funktionelle Gruppen analysiert und die entsprechenden Gruppen detektiert werden, was die Ermittlung des zumindest einen Fremdstoffs weiter verbessert.

Gemäß einer weiteren vorteilhaften Weiterbildung der Erfindung erfolgt die Anregung der entnommenen Probe in einem Wellenlängenbereich zwischen 50 nm und 600 nm, insbesondere zwischen 100 nm und 500 nm, vorzugsweise zwischen 150 nm und 400 nm. Damit ist es möglich, eine Anregung, insbesondere für Fremdstoffe, zu ermöglichen, welche im Abwasser, wie beispielsweise Pestizide, etc., regelmäßig vorkommen, so dass ein aussagekräftiges Spektrum für die Absorptionsspektroskopie zur Analyse und Erkennung der Fremdstoffe in der Probe erhalten werden kann.

Weitere wichtige Merkmale und Vorteile der Erfindung ergeben sich aus den Unteransprüchen, aus den Zeichnungen, und aus der dazugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

Dabei zeigen jeweils in schematischer Form
- Fig. 1: ein Intensitäts-Wellenlängendiagramm von Kurven zu zwei verschiedenen Zeitpunkten, basierend auf UV-Absorptionsspektroskopie gemäß einer Ausführungsform der vorliegenden Erfindung;
- Fig. 2: eine Reinigungsvorrichtung gemäß einer Ausführungsform der vorliegenden Erfindung;
- Fig. 3: ein Ablaufdiagramm für einen Teil eines Verfahrens gemäß einer Ausführungsform der vorliegenden Erfindung;
- Fig. 4: eine Übersicht über Stoffe und deren Eliminierung durch eine Vorrichtung gemäß einer Ausführungsform der vorliegenden Erfindung;
- Fig. 5: ein Ablaufdiagramm für einen Teil eines Verfahrens gemäß einer Ausführungsform der vorliegenden Erfindung; und
- Fig. 6: Schritte eines Verfahrens gemäß einer Ausführungsform der vorliegenden Erfindung.

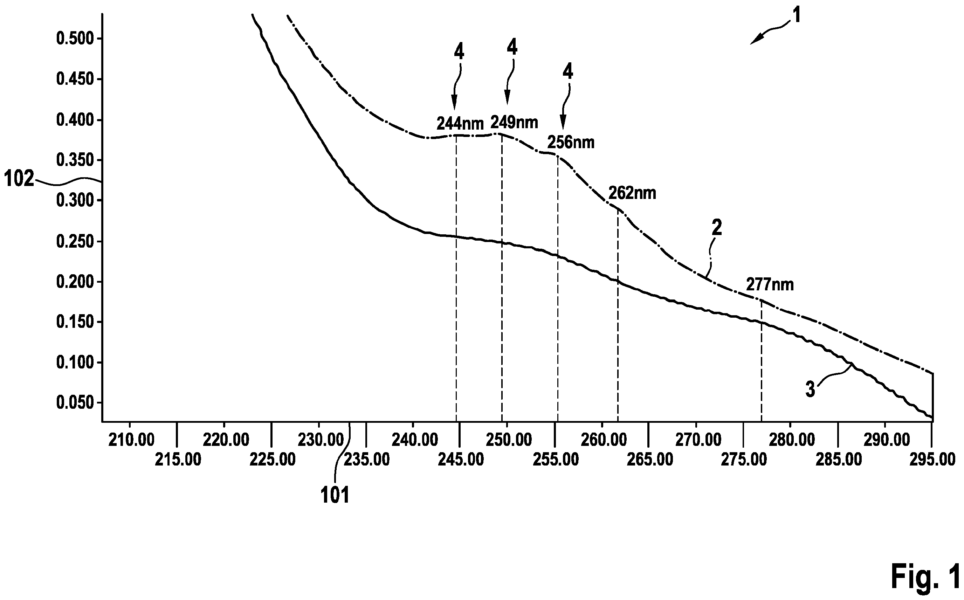

Figur 1 zeigt ein Intensitäts-Wellenlängendiagramm von Kurven zu zwei verschiedenen Zeitpunkten, basierend auf UV-Absorptionsspektroskopie gemäß einer Ausführungsform der vorliegenden Erfindung.

In Figur 1 ist ein Intensitäts-Wellenlängendiagramm 1 gezeigt, wobei hier über der Wellenlänge 101 die jeweils gemessene Intensität 102 in beliebigen Einheiten auf Basis einer breitbandigen, hochauflösenden UV-Absorptionsspektroskopie aufgetragen ist. Die beiden Kurven 2, 3 weisen jeweils Peaks 4 bei den Wellenlängen 244 nm, 249 nm, 256 nm, 262 nm und 277 nm auf. Die Probenahme zum Erhalt der Spektren wurde jeweils an einem Auslauf der dritten Stufe eines Klärwerks entnommen und entsprechend spektroskopisch untersucht. Die zu untersuchende Probe für die Kurve 2 wurde hierbei eine Woche vor der Probenahme für die Probe der Kurve 3 genommen. Zum Zeitpunkt der später entnommenen Probe sind die gemessenen Intensitäten, aus denen sich mittels des Lambert-Beer'schen Gesetzes dann die Konzentration des jeweiligen Stoffs in der Probe ermitteln lässt, weniger stark ausgeprägt, da zu dem Zeitpunkt der Probenahme für die Kurve 3, die gemessenen Spurenstoffe durch starke Regenfälle verdünnt wurden. Insoweit verläuft die gesamte Kurve 3 in dem in Figur 1 dargestellten Wellenlängenabschnitt unterhalb der Kurve 2.

Anhand des Peaks 4 bei 256 nm und 277nm und der Intensität kann der Spurenstoff Benzotriazol identifiziert und seine Konzentration ermittelt werden. Anhand der Intensitätsverläufe der Spektren können die Summen-Signale der Spurenstoffe zeitabhängig und online, also kontinuierlich, bestimmt werden und vor und nach entsprechender Zugabe von Neutralisierungsstoffen die jeweiligen Konzentrationen der optisch absorbierenden Spurenstoffe aus dem Signalverlauf in einem bestimmten Wellenlängenbereich ermittelt werden, was eine genauere Bestimmung der Konzentrationen ermöglichen kann.

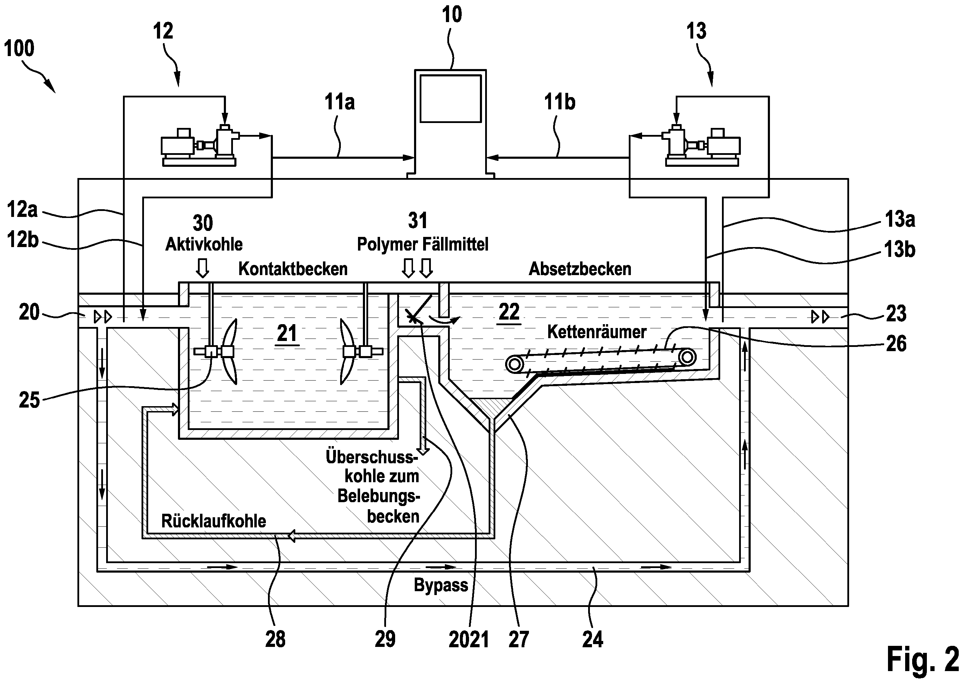

Figur 2 zeigt eine Reinigungsvorrichtung gemäß einer Ausführungsform der vorliegenden Erfindung.

In Figur 2 ist in schematischer Form eine Reinigungsvorrichtung 100 in Form einer 4. Stufe eines Klärwerks gezeigt. Die 4. Stufe 100 umfasst dabei einen Zulauf 20, der in ein Kontaktbecken 21 mündet. In dem Kontaktbecken 21 sind Umwälzer 25 angeordnet, um die zum Wasser mit Spurenstoffen versetzte Aktivkohle 30 gleichmäßig zu verteilen. Das Kontaktbecken 21 ist über ein kleineres Verbindungsbecken 2021 mit einem Absetzbecken 22 verbunden. In dem Verbindungsbecken 2021 wird ein Polymerfällmittel 31 zugesetzt, um die Aktivkohle 30 in dem Absetzbecken 22 zur "Klumpen"- oder Clusterbildung anzuregen. Diese Aktivkohlecluster sammeln sich in dem Absetzbecken 22 auf dessen Boden und werden über einen Kettenräumer 26 in eine Sammeleinrichtung 27 in Form eines Trichters befördert. Über eine Leitung 28 wird die von der Sammeleinrichtung 27 gesammelte Aktivkohle 30 wieder dem Kontaktbecken 21 zugeführt. Überschüssige Aktivkohle 30 - Überschusskohle - in dem Kontaktbecken 21 wird über eine weitere Leitung 29 einem Belebungsbecken (hier nicht gezeigt) zugeführt. Das Absetzbecken 22 ist schließlich mit einem Ablauf 23 zum Ablauf des gereinigten Wassers verbunden. Weiterhin kann dem Ablauf 23 über eine Bypassleitung 24 direkt Wasser aus dem Zulauf zugemischt werden.

Die 4. Stufe 100 umfasst weiter eine Analysevorrichtung 10 zur Auswertung von entnommenen Proben, insbesondere zur Konzentrationsbestimmung von einer oder mehreren Leitgrößen. Hierzu ist die Analysevorrichtung 10 über eine Schlauchpumpe 12 und Leitungen 12a, 11a mit dem Zulauf 20 verbunden. Zur Probenahme wird nur eine geringe Menge von Wasser aus dem Zulauf 20 benötigt, sodass überschüssiges Wasser über die Schlauchpumpe 12 und eine Leitung 12b wieder dem Zulauf 20 zugeführt wird. Ebenso ist die Analysevorrichtung 10 in analoger Weise mit dem Ablauf 23 verbunden. Über Leitungen 13a, 11b mit Schlauchpumpe 13 wird der Analysevorrichtung 10 über eine weitere Leitung eine Probenahme von Wasser aus dem Ablauf 23 ermöglicht. Zur Probenahme wird nur eine geringe Menge von Wasser aus dem Ablauf 23 benötigt, sodass überschüssiges Wasser über die Schlauchpumpe 13 und eine Leitung 13b wieder dem Ablauf 23 zugeführt wird. So werden zwei getrennte Kreisläufe für Zulauf und Ablauf realisiert, sodass nur aktuelle Proben analysiert werden.

Die Analysevorrichtung 10 arbeitet wie folgt: Mittels eines Breitband-UV-Absorptionsspektrometers mit hoher spektraler Auflösung wird ein großer Wellenlängenbereich gemessen. Die so erhaltenen Spektren werden integriert und als Summen-Werte bereitgestellt. Diese Integralauswertung erfolgt dabei sowohl online an Proben des Zulaufs 20 als auch des Ablaufs 23. Die Proben aus Zulauf 20 und Ablauf 23 werden zeitlich alternierend entnommen und analysiert.

Basierend auf den Ergebnissen der Analysevorrichtung 10 wird die Zugabe der Aktivkohle 30 in das Kontaktbecken 21 gesteuert, sodass entsprechend der Konzentration der Leitgröße beziehungsweise Leitgrößen, den unerwünschten Spurenstoffe immer eine geeignete Menge an Aktivkohle zu deren Neutralisierung, hier zur Adsorption, zur Verfügung steht.

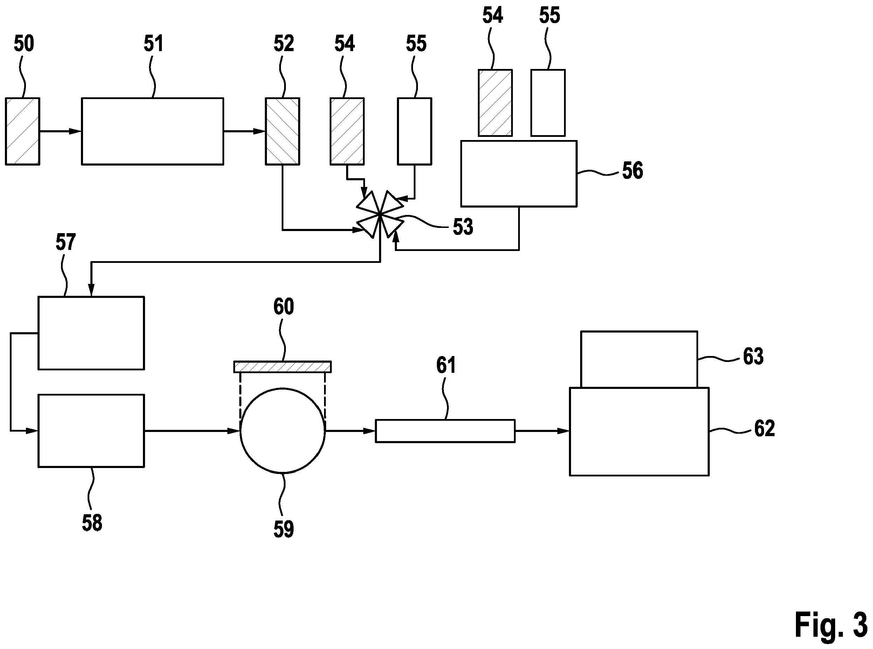

Zur Berechnung von Einzelkonzentrationen, beispielweise der Spurenstoffe Diclofenac oder Benzotriazol als Leitgrößen, können diese auf Grund der teilweisen Neutralisierung in geringer Konzentration vorliegen. Hier kann deshalb vor der Analyse derselben in einem ersten Schritt eine Aufkonzentrierung beziehungsweise Anreicherung erfolgen und in einem zweiten Schritt dann eine Trennung der einzelnen Spurenstoffe aus der Probe zur Einzelanalyse. Insbesondere kann die Aufkonzentrierung mittels einer Festphasenextraktion - SPE, solid phase extraction - erfolgen, wobei dann im Anschluss ein Gradientenverfahren zur Abtrennung der einzelnen Stoffe erfolgt. Beides ist in der folgenden Figur 3 beschrieben.

Figur 3 zeigt ein Ablaufdiagramm für einen Teil eines Verfahrens gemäß einer Ausführungsform der vorliegenden Erfindung.

In Figur 3 ist ein Ablaufdiagramm für die Durchführung einer Festphasenextraktion mit anschließendem Gradientenverfahren gezeigt. In einem ersten Schritt wird hierzu die aus Zu- oder Ablauf 20, 23 entnommene Probe in eine Vorlage 50 gepumpt beziehungsweise eingebracht. Anschließend erfolgt eine Destillation in einem Destillator 51, um ein Destillat 52 zu erhalten. Die Destillation kann unter anderem dazu dienen, problematische Stoffe, wie beispielsweise Nitrat, welches die nachfolgende spektroskopische Analyse dominieren und damit stören würde, zu eliminieren oder zumindest erheblich zu reduzieren.

Das Destillat 52 wird über ein Verteilerventil 53 in einen Entgaser 57 geleitet und mittels einer Hochdruckpumpe 58 über ein Injektionsventil 59 in ein Chromatographie-Säulensystem 60 gepresst. Anschließend werden die im Chromatographie-Säulensystem 60 enthaltenen Spurenstoffe der Probe mit Hilfe des Gradientenmischsystems 54, 55, 56 mit Mischungen aus doppelt destilliertem Wasser bei zeitlich ansteigender Konzentration eines Lösungsmittels, hier insbesondere Acetonitril, chromatographisch getrennt, dem UV-Spektrometer 62 der Analysevorrichtung 10 mit Computer 63 zugeführt und spektroskopisch analysiert.

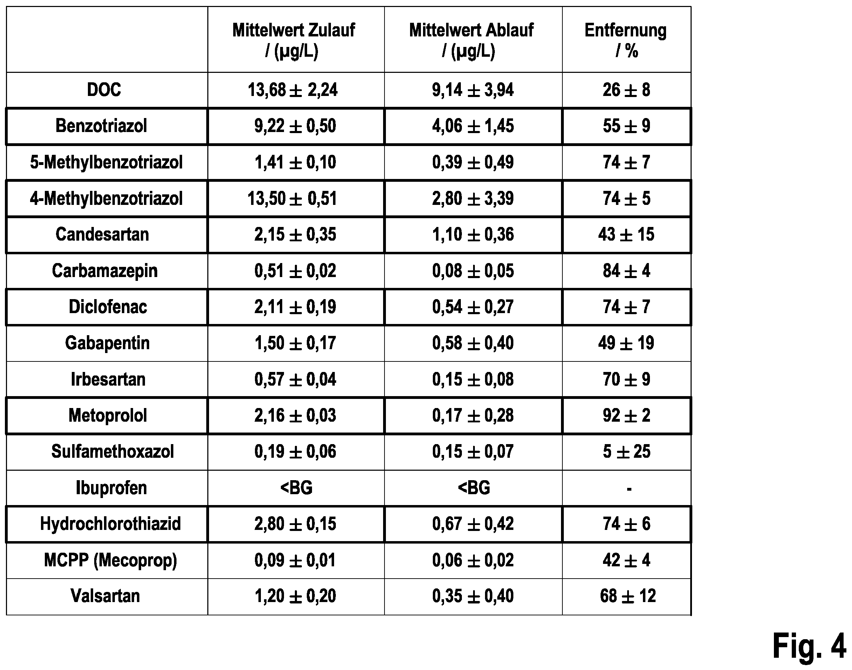

Figur 4 zeigt eine Übersicht über Stoffe und deren Eliminierung durch eine Vorrichtung gemäß einer Ausführungsform der vorliegenden Erfindung.

In der Figur 4 ist eine Übersicht einer statistischen Auswertung, insbesondere Mittelwerte, Standardabweichungen und Eliminationen von verschiedenen Einzelspurenstoffen und dem in der Probe gelösten organischen Kohlenstoff (DOC) mit seiner Standardabweichung gezeigt. Zu sehen ist hier, dass mittels der in der Figur 2 gezeigten Reinigungsvorrichtung eine erhebliche Neutralisierung von Spurenstoffen von bis zu 92% beim Vergleich zwischen Zu- und Ablauf erreicht werden kann.

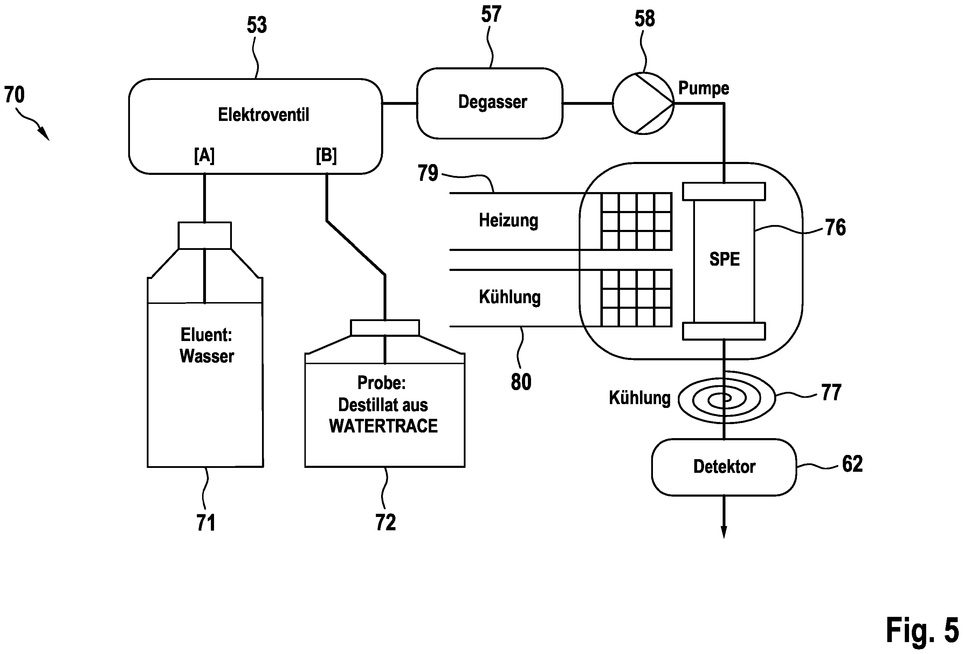

Figur 5 zeigt ein Ablaufdiagramm für einen Teil eines Verfahrens gemäß einer Ausführungsform der vorliegenden Erfindung.

In Figur 5 ist im Detail und schematisch ein Teil des Ablaufdiagramms der Figur 3 gezeigt. Die SPE-Vorrichtung 70 umfasst dabei eine Eluentenbereitstellung 71, hier mit dem Eluent Wasser, und eine Probenbereitstellung 72 eines Destillats. Im Unterschied zu dem Ablaufdiagramm der Figur 3 wird hier kein Lösungsmittel benötigt. Über ein gemeinsames Elektroventil 53 können die beiden Bereitstellungen 71, 72 geschaltet werden. Zunächst wird eine Probe einem Entgaser 57 zugeführt. Mittels einer Hochdruckpumpe 58 wird diese dann weiter in eine SPE-Kartusche 76 überführt, die Raumtemperatur aufweist. Hierbei werden dann die organischen Komponenten aus der Probe extrahiert. Im Anschluss daran kann die SPE-Kartusche 76 gegebenenfalls mit Reinstwasser aus der Wasserbereitstellung 71 gespült werden, um nicht-sorbierende Verbindungen in der Wassermatrix der SPE-Kartusche 76 zu entfernen. Nach dem Spülen der SPE-Kartusche 76 wird diese mittels einer Heizeinrichtung 79 erwärmt. Hierbei wird ein Temperaturgradient über mehrere Minuten bis zu einer Endtemperatur gefahren. Währenddessen wird die SPE-Kartusche 76 mit vortemperiertem Wasser beaufschlagt. Dadurch werden Substanzen von dem Adsorber eluiert. Nach Erreichen der Endtemperatur und dem Halten dieser für eine vorgebbare Zeitspanne wird die Heizeinrichtung 79 abgeschaltet und mittels einer Kühleinrichtung 80, 77 wird solange gekühlt, bis die SPE-Kartusche 76 wieder Raumtemperatur aufweist. Anschließend wird die Probe dem Detektor 62 zugeführt und es kann eine neue Probe der SPE-Vorrichtung 70 zugeführt werden.

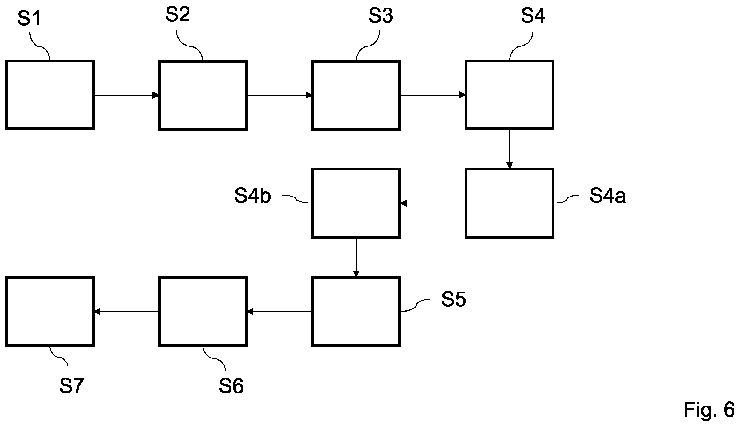

Figur 6 zeigt Schritte eines Verfahrens gemäß einer Ausführungsform der vorliegenden Erfindung.

In Figur 6 sind Schritte eines Verfahrens zur kontinuierlichen, zumindest teilweisen Entfernung von Fremdstoffen, insbesondere von Korrosionsschutzmitteln und/oder Medikamenten, aus einem Fluid, insbesondere in Abwasser, mittels einer Reinigungsvorrichtung gezeigt, wobei die Reinigungsvorrichtung einen Zulauf für ein zu reinigendes Fluid umfasst und einen Ablauf für das durch die Reinigungsvorrichtung gereinigte Fluid.

Das Verfahren umfasst dabei die folgenden Schritte:
- Festlegen S1 zumindest eines Leitfremdstoffs für eine Gruppe von Fremdstoffen gleichen Zwecks, wobei die Gruppe zumindest den Leitfremdstoff und zumindest einen weiteren Fremdstoff, insbesondere mehrere weitere Fremdstoffe, umfasst,
- Ermitteln S2 eines Neutralisierungsmediums aus einer Anzahl bereitgestellter Neutralisierungsmedien für die Gruppe von Fremdstoffen,
- Entnehmen S3 einer ersten Probe aus dem Fluid in einem Zulauf vor der Reinigungsvorrichtung und Entnehmen einer zweiten Probe in einem Ablauf der Reinigungsvorrichtung,
- Analysieren S4 der entnommenen Proben zumindest mittels UV/VIS-Spektroskopie, wobei das Analysieren mittels UV/VIS-Spektroskopie die folgenden Schritte umfasst:
   - Anregen S4a der jeweiligen Probe mit Licht, insbesondere mit Licht eines Lasers, einer Xenonlampe oder einer Deuteriumlampe, mit zumindest einer Anregungswellenlänge, und
   - Aufnehmen S4b zumindest eines Absorptionsspektrums des durch die Probe transmittierten Lichts und/oder zumindest eines Fluoreszenzspektrums von reemittiertem Licht der jeweiligen Probe mittels einer Detektionseinrichtung,
- Ermitteln S5 der Konzentration des Leitfremdstoffs in den analysierten Proben anhand jeweils zumindest eines der aufgenommenen Spektren,
- Vergleichen S6 der ermittelten Konzentrationen des Leitfremdstoffs in Zu- und Ablauf und Bereitstellen eines Vergleichsergebnisses, und
- Zugeben S7 einer Menge des Neutralisierungsmediums entsprechend dem bereitgestellten Vergleichsergebnis in das Fluid im Zulauf zur zumindest teilweisen Neutralisierung der Gruppe von Fremdstoffen mit dem Leitfremdstoff.

Zusammenfassend weist die vorliegende Erfindung mehrere Vorteile auf: Zum einen ist das Verfahren beziehungsweise die Vorrichtung kostengünstig und mit einer hohen Genauigkeit für die Erkennung beziehungsweise Detektion von Leitspurenstoffen in Abwässern durchführbar beziehungsweise herstellbar. Dadurch können durch eine einfache Analyse von Proben und die Ermittlung von Leitgrößen Gruppen von Spurenstoffen erkannt und mittels Neutralisierungsmedien eliminiert werden. Schließlich bietet die vorliegende Erfindung den Vorteil, dass das Verfahren automatisiert ablaufen kann und gleichzeitig der personelle und zeitliche Kostenaufwand wesentlich gesenkt wird. Die Zuverlässigkeit der Überwachung von Spurenstoffen in Abwässern kann dadurch wesentlich erhöht werden. Ebenso kann der Einsatz von Neutralisierungsmedien für Spurenstoffe reduziert werden, was ebenfalls erhebliche Kosten einspart.

Obwohl die vorliegende Erfindung vorstehend anhand bevorzugter Ausführungsbeispiele beschrieben wurde, ist sie nicht darauf beschränkt, sondern auf vielfältige Weise modifizierbar.

### Bezugszeichenliste

- 1: Intensitäts-Wellenlängendiagramm
- 2: Kurve - Probe 2
- 3: Kurve - Probe 3
- 4: Peak

- 10: Analysevorrichtung
- 11a, 11b: Leitungen
- 12: Schlauchpumpe
- 12a, 12b: Leitungen
- 13: Schlauchpumpe
- 13a, 13b: Leitungen

- 20: Zulauf
- 21: Kontaktbecken
- 22: Absetzbecken
- 23: Ablauf
- 24: Bypassleitung
- 25: Umwälzer
- 26: Kettenräumer
- 27: Sammeleinrichtung
- 28: Leitung
- 29: Leitung
- 30: Aktivkohle
- 31: Polymerfällmittel

- 50: Vorlage
- 51: Destillator
- 52: Destillat
- 53: Verteilerventil
- 54: Teil Gradientenmischsystem
- 55: Teil Gradientenmischsystem
- 56: Teil Gradientenmischsystem
- 57: Entgaser
- 58: Hochdruckpumpe
- 59: Hochdruckventil
- 60: Chromatographie-Säulensystem
- 62: UV-Spektrometer
- 63: Computer

- 70: SPE-Vorrichtung
- 71: Eluentenzuführung
- 72: Probenzuführung
- 76: SPE-Kartusche
- 77: Kühleinrichtung
- 79: Heizeinrichtung
- 80: Kühleinrichtung

- 100: Reinigungsvorrichtung
- 101: Wellenlänge
- 102: Intensität

- 2021: Verbindungsbecken

- S1-S7: Schritte eines Verfahrens

## Patentansprüche

1. Verfahren zur kontinuierlichen, zumindest teilweisen Entfernung von Fremdstoffen, insbesondere von Korrosionsschutzmitteln und/oder Medikamenten, aus einem Fluid, insbesondere in Abwasser, mittels einer Reinigungsvorrichtung (100), wobei die Reinigungsvorrichtung (100) einen Zulauf (20) für ein zu reinigendes Fluid umfasst und einen Ablauf (23) für das durch die Reinigungsvorrichtung (100) gereinigte Fluid, umfassend die Schritte
- Festlegen (S1) zumindest eines Leitfremdstoffs für eine Gruppe von Fremdstoffen gleichen Zwecks, wobei die Gruppe zumindest den Leitfremdstoff und zumindest einen weiteren Fremdstoff, insbesondere mehrere weitere Fremdstoffe, umfasst,
- Ermitteln (S2) eines Neutralisierungsmediums aus einer Anzahl bereitgestellter Neutralisierungsmedien für die Gruppe von Fremdstoffen,
- Entnehmen (S3) einer ersten Probe aus dem Fluid in einem Zulauf (20) vor der Reinigungsvorrichtung (100) und Entnehmen einer zweiten Probe in einem Ablauf (23) der Reinigungsvorrichtung (100),
- Analysieren (S4) der entnommenen Proben zumindest mittels UV/VIS-Spektroskopie, wobei das Analysieren mittels UV/VIS-Spektroskopie die folgenden Schritte umfasst:
• Anregen (S4a) der jeweiligen Probe mit Licht, insbesondere mit Licht eines Lasers, einer Xenonlampe oder einer Deuteriumlampe, mit zumindest einer Anregungswellenlänge, und
• Aufnehmen (S4b) zumindest eines Absorptionsspektrums des durch die Probe transmittierten Lichts und/oder zumindest eines Fluoreszenzspektrums von reemittiertem Licht der jeweiligen Probe mittels einer Detektionseinrichtung (62),
- Ermitteln (S5) der Konzentration des Leitfremdstoffs in den analysierten Proben anhand jeweils zumindest eines der aufgenommenen Spektren,
- Vergleichen (S6) der ermittelten Konzentrationen des Leitfremdstoffs in Zu- und Ablauf (20, 23) und Bereitstellen eines Vergleichsergebnisses,
- Zugeben (S7) einer Menge des Neutralisierungsmediums entsprechend dem bereitgestellten Vergleichsergebnis in das Fluid im Zulauf (20) zur zumindest teilweisen Neutralisierung der Gruppe von Fremdstoffen mit dem Leitfremdstoff,
vorzugsweise wobei
das Vergleichsergebnis durch Vergleich der Differenz der beiden Konzentrationen mit einem Schwellwert ermittelt wird.

2. Verfahren gemäß Anspruch 1, **dadurch gekennzeichnet, dass** als Neutralisierungsmedien ein Adsorptionsmittel (30), vorzugsweise Aktivkohle und/oder ein Oxidationsmittel, insbesondere Ozon, bereitgestellt werden, vorzugsweise wobei die Aktivkohle (30) in Pulverform und/oder als Granulat bereitgestellt wird.

3. Verfahren gemäß einem der Ansprüche 1-2, **dadurch gekennzeichnet, dass** vor dem Analysieren (S4) die Fremdstoffe in der entnommenen Probe angereichert werden und/oder die Probe zumindest teilweise entgast wird, vorzugsweise wobei das Anreichern der Fremdstoffe mittels zumindest einem der folgenden Verfahren durchgeführt wird:
- lösungsmittelbasierter Festphasenextraktion,
- Festphasenextraktion mit subkritischem Wasser,
- temperaturgestufter Festphasenextraktion,
- lösungsmittelfreier Festphasenextraktion (70, 76), und/oder
- Destillation (51) der Probe, insbesondere mittels fraktionierter Destillation, Vakuum-Destillation und/oder Überdruck-Destillation, vorzugsweise wobei die fraktionierte Destillation pH-angepasst durchgeführt wird.

4. Verfahren gemäß einem der Ansprüche 1-3, **dadurch gekennzeichnet, dass** Analysierstörstoffe in dem Fluid identifiziert werden, insbesondere Nitrat oder dergleichen, und diese vor dem Analysieren (S4) der Probe auf Fremdstoffe zumindest teilweise entfernt werden.

5. Verfahren gemäß einem der Ansprüche 1-4, **dadurch gekennzeichnet, dass** das Analysieren (S4) des zumindest einen Absorptionsspektrums eine Durchführung eines multivariaten Kalibrierungsverfahrens, vorzugsweise eines partial-least-square-Verfahrens, PLS-Verfahrens, umfasst.

6. Verfahren gemäß einem der Ansprüche 1-5, **dadurch gekennzeichnet, dass** das Analysieren (S4) der entnommenen Probe eine Durchführung eines Flüssigchromatographie-Verfahrens (60), insbesondere HPLC, umfasst, vorzugsweise umfassend die Gradientenmethode.

7. Verfahren gemäß einem der Ansprüche 1-6, **dadurch gekennzeichnet, dass** das Entnehmen (S3) der Probe aus Zu- und Ablauf (20, 23) periodisch und/oder auf Anforderung, insbesondere separat für Zu- und Ablauf (20, 23), erfolgt.

8. Verfahren gemäß einem der Ansprüche 1-7, **dadurch gekennzeichnet, dass** das Entnehmen (S3) der Probe (2) aus dem Zulauf (20) und das Entnehmen (S3) der Probe (3) aus dem Ablauf (23) zeitlich versetzt mit einer vorgebbaren Zeitspanne erfolgt.

9. Verfahren gemäß einem der Ansprüche 1-8, **dadurch gekennzeichnet, dass** die zumindest eine Gruppe von Fremdstoffe gebildet wird durch
- korrosionshemmende Stoffe,
- pharmazeutische Stoffe, insbesondere Arzneistoffe, vorzugsweise Nichtopioid-Analgetika,
- unkrautbekämpfende Stoffe, insbesondere Wuchsstoffherbizide,
- Biozide,
- Röntgenkontrastmittel,
- Hormone, und/oder
- polyzyklische aromatische Kohlenwasserstoffe,
vorzugsweise wobei
als der Leitfremdstoff für die Gruppe der korrosionshemmenden Stoffe Benzotriazol gewählt wird und/oder dass als der Leitfremdstoff für die Gruppe der pharmazeutische Stoffe 2-{2-[(2,6-Dichlorphenyl)amino]phenyl}ethansäure gewählt wird.

10. Verfahren gemäß einem der Ansprüche 1-9, **dadurch gekennzeichnet, dass** das Analysieren (S4) der Probe aus dem Zulauf (20) und aus dem Ablauf (23) anhand getrennter Kreisläufe erfolgt.

11. Verfahren gemäß einem der Ansprüche 1-10, **dadurch gekennzeichnet, dass** die jeweils entnommene Probe wieder dem Zulauf (20) oder Ablauf (23) zugeführt wird.

12. Verfahren gemäß einem der Ansprüche 1-11, **dadurch gekennzeichnet, dass** zum Analysieren (S4) der entnommenen Probe eine Flüssigkeits-Hohlleiter-Kapillarzelle verwendet wird, insbesondere wobei die Flüssigkeits-Hohlleiter-Kapillarzelle auf ihrer Innenseite mit einer hydrophilen Schicht versehen ist.

13. Verfahren gemäß einem der Ansprüche 1-12, **dadurch gekennzeichnet, dass** das Absorptions- und/oder Fluoreszenzspektrum in einem Wellenlängenbereich zwischen 50 nm und 1.500 nm, vorzugsweise zwischen 100 nm und 1.200 nm, insbesondere zwischen 180 nm und 1.050 nm, besonders vorzugsweise zwischen 200 nm und 400 nm, aufgenommen wird.

14. Verfahren gemäß einem der Ansprüche 1-13, **dadurch gekennzeichnet, dass** die Anregung der entnommenen Probe in einem Wellenlängenbereich zwischen 50 nm und 600 nm, insbesondere zwischen 100 nm und 500 nm, vorzugsweise zwischen 150 nm und 400 nm, erfolgt.

15. Reinigungsvorrichtung (100), insbesondere eine großtechnische Kläranlage, zur kontinuierlichen, zumindest teilweisen Entfernung von Fremdstoffen, insbesondere von Korrosionsschutzmitteln und/oder Medikamenten, aus einem Fluid, insbesondere in Abwasser,
umfassend
einen Zulauf (20) für ein zu reinigendes Fluid zu einer Reinigungseinrichtung,
einen Ablauf (23) der Reinigungseinrichtung für ein gereinigtes Fluid,
eine Entnahmevorrichtung,
eine Festlegeeinrichtung,
eine Neutralisierungsmediumbereitstellungseinrichtung,
eine Detektionseinrichtung (70),
eine Zuführeinrichtung,
eine Auswerteeinrichtung (10) und
eine Steuereinrichtung, die mit der Auswerteeinrichtung (10) verbunden ist, wobei
die Entnahmevorrichtung ausgebildet ist, zum Entnehmen einer ersten Probe aus dem Fluid in dem Zulauf (20) und zum Entnehmen einer zweiten Probe in dem Ablauf (23), und wobei
die Neutralisierungsmediumbereitstellungseinrichtung ausgebildet ist, zum Bereitstellen zumindest eines Neutralisierungsmediums für zumindest eine Gruppe von Fremdstoffen, und wobei
die Festlegeeinrichtung ausgebildet ist
- zum Festlegen (S1) zumindest eines Leitfremdstoffs für eine Gruppe von Fremdstoffen gleichen Zwecks, wobei die Gruppe zumindest den Leitfremdstoff und zumindest einen weiteren Fremdstoff, insbesondere mehrere weitere Fremdstoffe, umfasst und
- zum Ermitteln (S2) eines Neutralisierungsmediums aus einer Anzahl bereitgestellter Neutralisierungsmedien für die Gruppe von Fremdstoffen gleichen Zwecks, und wobei
die Auswerteeinrichtung (10) ausgebildet ist zum
- Analysieren (S4) der entnommenen Proben (2, 3) mittels UV/VIS-Spektroskopie, wobei das Analysieren mittels UV/VIS-Spektroskopie die folgenden Schritte umfasst:
• Anregen (S4a) der jeweiligen Probe mit Licht, insbesondere mit Licht eines Lasers, einer Xenonlampe oder einer Deuteriumlampe, mit zumindest einer Anregungswellenlänge, und
• Aufnehmen (S4b) zumindest eines Absorptionsspektrums des durch die Probe transmittierten Lichts und/oder zumindest eines Fluoreszenzspektrums von reemittiertem Licht der jeweiligen Probe mittels der Detektionseinrichtung (70), zum
- Ermitteln (S5) von zumindest der Konzentration des Leitfremdstoffs in den analysierten Proben anhand jeweils zumindest eines der aufgenommenen Spektren, und zum
- Vergleichen (S6) der ermittelten Konzentrationen des Leitfremdstoffs in Zu- und Ablauf (20, 23) und Bereitstellen eines Vergleichsergebnisses, und wobei
die Zuführeinrichtung ausgebildet ist, zum Zugeben (S7) einer Menge des Neutralisierungsmediums entsprechend dem bereitgestellten Vergleichsergebnis in das Fluid im Zulauf (20) mittels der Neutralisierungsbereitstellungseinrichtung zur zumindest teilweisen Neutralisierung der Stoffe der Gruppe von Fremdstoffen mit dem Leitfremdstoff.
